Europäisches Patentamt

European Patent Office

Office européen des brevets

(19)

(11) Numéro de publication: **0 229 581**
**A1**

(12) ## DEMANDE DE BREVET EUROPEEN

(21) Numéro de dépôt: 86440094.0

(22) Date de dépôt: 28.10.86

(51) Int. Cl.4: **G02B 21/00** , **G02B 7/11** ,
**G02B 21/24** , **G01N 15/14** ,
**H04N 5/232**

(30) Priorité: 28.10.85 FR 8516090

(43) Date de publication de la demande:
**22.07.87 Bulletin 87/30**

(84) Etats contractants désignés:
**AT BE CH DE ES GB GR IT LI LU NL SE**

(71) Demandeur: **BIOCONCEPT SàRL**
**28 boulevard de la Californie**
**F-06200 Nice(FR)**

(72) Inventeur: **Renaudin, Emmanuel**
**128 avenue de la Lanterne**
**F-06200 Nice(FR)**
Inventeur: **Balbo, Michel**
**88 chemin de la Madonette**
**F-06200 Nice(FR)**
Inventeur: **Giordana, Jean-Louis**
**48 Avenue Denis Semeria**
**F-06300 Nice(FR)**

(74) Mandataire: **Leszczynski, André et al**
**CABINET NONY & CIE. 29 rue Cambacérès**
**F-75008 Paris(FR)**

(54) **Dispositif pour la mise au point automatique d'un microscope.**

(57) Dispositif pour la mise au point automatique d'un instrument d'optique, notamment d'un microscope, caractérisé en ce que la vis micrométrique (6) déterminant les déplacements verticaux de la platine (4) par rapport à l'objectif (2) est accouplée à un groupe moteur réducteur (7) asservi au signal vidéo recueilli par une caméra vidéo (8) recevant l'image donnée par l'instrument et traitée par un ordinateur - (9), la rotation du moteur (7) étant commandée à chaque instant en sens et en rotation jusqu'à ce que l'intensité lumineuse de ladite image ait atteint son intensité maximale.

Fig 1

# DISPOSITIF POUR LA MISE AU POINT AUTOMATIQUE D'UN MICROSCOPE.

La présente invention concerne un nouveau dispositif pour la mise au point automatique des microscopes. Un tel dispositif trouve une utilité particulière dans les installations comportant des moyens pour l'observation par un microscope d'une série d'échantillons se présentant devant l'objectif, les images successives de ces échantillons étant captées par une caméra vidéo, elle-même connectée à un système informatique pour leur exploitation. Dans une telle installation il est important que la mise au point soit réalisée en permanence, c'est-à-dire que le microscope comporte des moyens pilotant constamment la platine afin que la surface élémentaire de chaque lame à analyser soit bien placée dans le plan focal objet de la lentille d'entrée de l'objectif du microscope.

Des dispositifs destinés à piloter une focalisation sont connus. Ils comportent généralement un transducteur recevant l'image donnée par un dispositif optique, et délivrant à chaque instant une tension proportionnelle à l'intensité de cette image, de manière à commander la mise au point de ce dispositif optique en faisant varier la distance focale de la lentille, l'objet demeurant fixe.

Bien que pour la plupart de leurs applications ces systèmes soient suffisamment précis, il demeurait un domaine particulier où ils ne sont pas appropriés, à savoir celui faisant appel à l'analyse d'image, dans laquelle chaque point de l'image doit être considéré individuellement. En effet, dans la technique classique, on ne fait appel qu'à une intensité lumineuse représentant une moyenne de celles de tous les points, ce qui exclue évidemment la possibilité de repérage des points individuels en fonction de leur intensité lumineuse propre.

Au contraire, la présente invention utilise le balayage vidéo pour rechercher, dans chaque image, le point le plus lumineux, pour ensuite rechercher la position de la platine pour laquelle l'intensité lumineuse de ce point est maximale.

A cet effet, selon l'invention dans son principe, la vis micrométrique de réglage du microscope, que détermine les déplacements de la platine, est accouplée à un moteur, dont la commande est elle-même asservie par le signal vidéo recueilli par la caméra. Tant que le point de focalisation n'est pas atteint, le moteur est commandé, en sens et en vitesse de rotation.

Dans la mise en oeuvre de cette technique, à chaque instant, la valeur maximale du signal vidéo est comparée à la précédente. Dès que cette valeur commence à baisser, le sens de rotation du moteur est inversé, et la vitesse de rotation diminuée.

Par cette procédure itérative, la platine est amenée et maintenue à la position de focalisation sans qu'il en résulte un ralentissement du processus d'analyse des échantillons. Selon une caractéristique importante de l'invention, dans la pratique, l'ensemble du système est commandé par deux cartes électroniques, la première de ces cartes commandant la puissance du moteur et la seconde pilotant la première à partir de la demande de focalisation de l'unité centrale de l'ordinateur, en fonction de l'analyse du signal vidéo fourni par la caméra. L'invention sera mieux comprise grâce la description ci-après, se référant au dessin annexé sur lequel :

La figure 1 est une représentation - schématique de l'ensemble du dispositif selon l'invention, associé à un microscope.

La figure 2 est un schéma destiné à l'illustration du mode de fonctionnement du dispositif, et

Les figures 3a et 3b sont deux courbes destinées à la même illustration.

Les figures 4a, 4b et 4c représentent la description des signaux vidéo significatifs en fonction de la distance du dessus de la lame à analyser à la lentille d'entrée de l'objectif.

La figure 5 est un synoptique général de la carte de puissance utilisée dans le système illustré à la figure 1.

La figure 6 est un synoptique général de la carte de pilotage utilisée dans le même système.

La figure 7 illustre l'interface CPU.

La figure 8 est un synoptique fonctionnel de la carte de pilotage.

et la figure 9 illustre les timings entre les divers signaux utilisés dans le système.

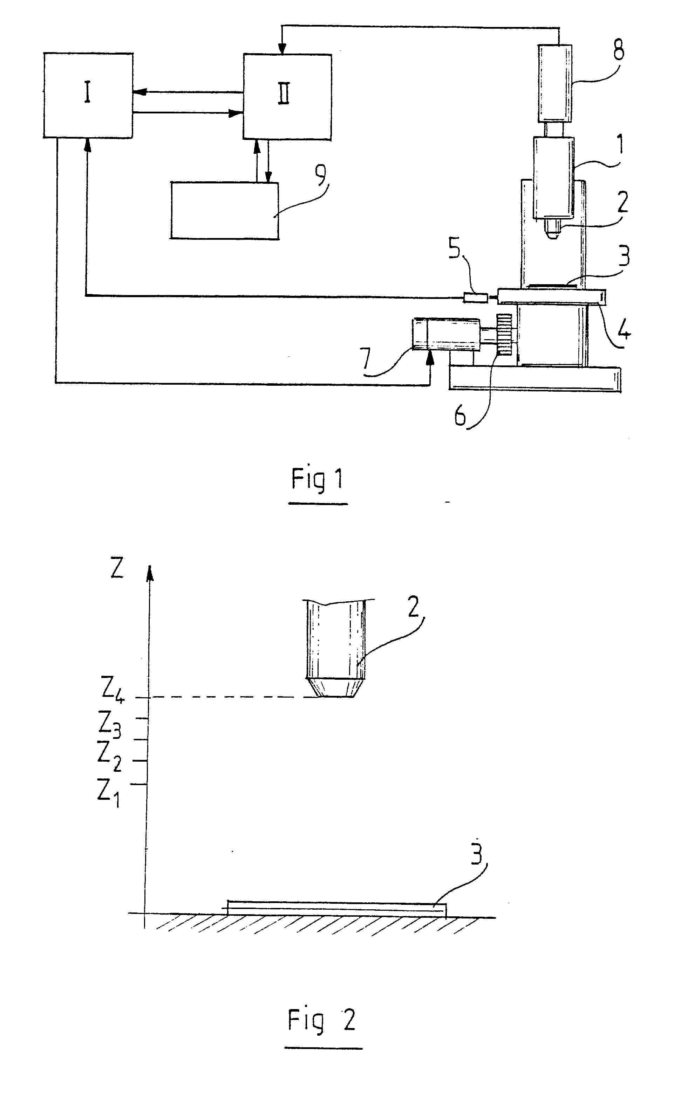

On se réfèrera tout d'abord à la figure 1, sur laquelle on a représenté très schématiquement un microscope optique dont l'objectif 2 est fixe par rapport au statif 1. La lame porte-échantillon 3, est portée par une platine 4 pouvant être manoeuvrée verticalement et repérée par un micro-interrupteur 5, au moyen d'une vis micrométrique 6 commandée par un groupe moteur/réducteur 7 ; dans cette réalisation, le moteur est du type pas à pas et le réducteur a un rapport permettant d'avoir une grande résolution et un couple approprié.

L'image de l'échantillon est captée par une caméra vidéo 8 dont le signal est analysé par une unité de pilotage II, qui à son tour, en fonction de cette analyse, gère le fonctionnement du moteur 7, en sens et en vitesse de rotation, par l'intermédiaire de la carte I. Cette dernière assure la conversion digitale du micro-interrupteur 5.

La focalisation est réalisée de la façon suivante : le signal vidéo venant de la caméra 8, donne, pour tout point de l'image du dessus de la lame 3 portant l'échantillon considéré, lui-même situé à une distance Z de l'objectif 2, une tension proportionnelle à son intensité lumineuse, et dans une telle image, il faut alors rechercher l'intensité maximale $I_M$. La mise au point est atteinte quand est détectée l'intensité maximale $I_{Mm}$ du point de luminosité maximale $I_M$.

Cette détection de $I_{Mm}$ se réalise en procédant, dans un premier temps, à une analyse grossière permettant de localiser la plage dans laquelle pourra se faire la focalisation, puis, dans un deuxième temps, à une analyse fine pour le repérage de la valeur $Z_M$ recherchée, le tout étant bien entendu piloté par l'unité 11.

En se référant à la figure 2, qui fait apparaître les distances Z du dessus de la lame 3 à l'objectif 2, les valeurs repérées pour Z sont le cas adopté comme exemple :

Z3 : 1000 µm -position maximale admissible de focalisation

Z2 : 800 µm -position moyenne de focalisation

Z1 : 600 µm -position minimale admissible de focalisation

Z4 : 1300 µm -position de l'objectif

Z0 : 0 µm -position minimale de la lame repérée par micro-interrupteur 5.

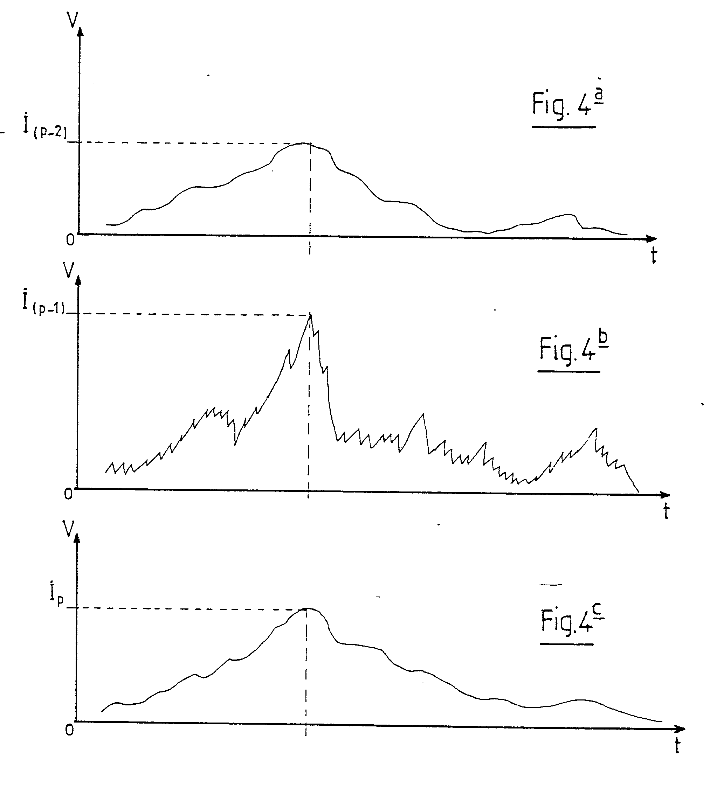

Si l'on se réfère maintenant aux figures 4a, 4b et 4c, on y a représenté l'intensité lumineuse - (convertie en volts), en fonction du temps, pour trois positions successives de la platine :

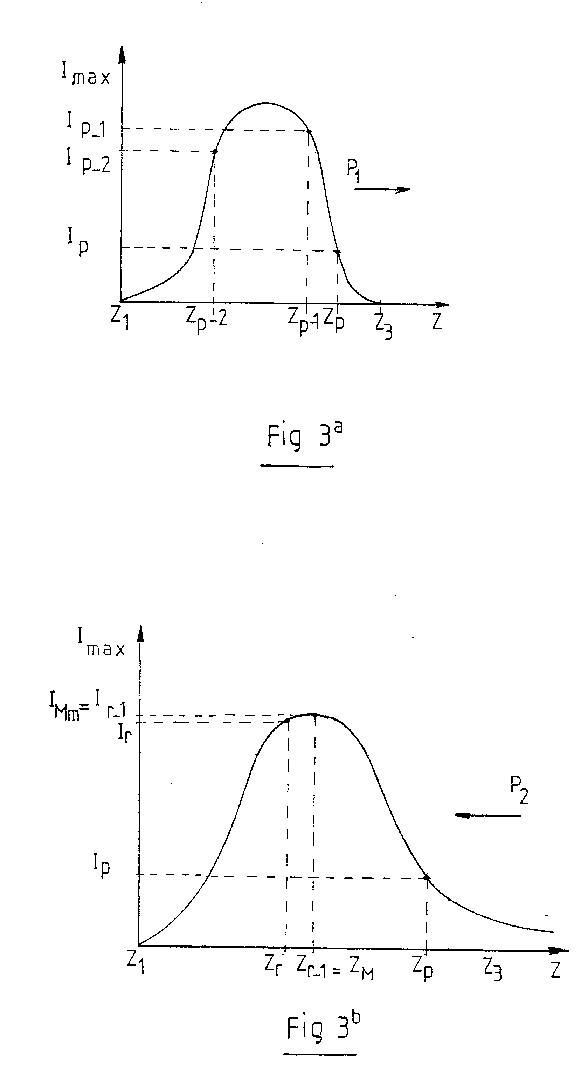

-sur la figure 4a, l'ordonnée $I_{p-2}$, correspond à l'intensité lumineuse maximale par l'image, au temps considéré, correspondant à la position défocalisée $Z_{p-2}$ de la figure 3 a.

-sur la figure 4b, l'ordonnée $I_{p-1}$ correspond à la position de focalisation,

-et sur la figure 4c, l'ordonnée $I_p$ correspond à la position défocalisée $Z_p$, après la focalisation.

Dans la pratique, les étapes du processus sont les suivantes :

a-Focus du premier champ.

La lame 3, étant en position Z0, est déplacée rapidement jusqu'a Z1, sans analyse du signal vidéo.

Depuis la position Z1, on analyse le signal vidéo, en faisant tourner le moteur jusqu'à ce que l'on rencontre pour la première fois une valeur d'intensité lumineuse Ip inférieure à la précédente $I_{p-1}$.

C'est ce qui est schématisé sur la courbe de la figure 3a, où le sens de parcours de la platine est P1 ( de Z1 à Z3), et on s'arrête au point Zp où Ip < $I_{p-1}$.

On inverse alors le sens de rotation du moteur, et le sens de parcours devient P2 (figure 3b). La rotation du moteur, dont la vitesse a été réduite, s'effectue jusqu'à rencontrer la première valeur d'intensité lumineuse Ir inférieure à la précédente $I_{r-1}$. On revient alors à la position $Z_{r-1}$ , ce qui correspond au point de focalisation $Z_M$.

Si au cours de la phase de focalisation aucune intensité lumineuse n'a été détectée jusqu'à la position Z3, c'est que le champ est vide. On revient alors en position Z1 sans analyse.

D'autre part si une intensité lumineuse est détectée supérieure à un certain seuil donné alors c'est que l'on a affaire à un champ parasite. On revient également en position Z1 sans analyse.

b-Focus inter-champ :

Deux cas peuvent se présenter pour la position de la lame:

-Position Z1 : la focalisation est réalisée selon le même procédé que le focus du premier champ.

-Position $Z_M$ du champ précédent : on analyse le signal vidéo sans déplacer la platine. On commence par rechercher la focalisation vers le haut selon le même procédé que pour le focus premier champ, et en cas d'échec on fait la recherche vers le bas. On détecte également l'apparition d'un champ parasite. Cette mise en oeuvre du système selon l'invention peut se faire de manière entièrement automatique, c'est-à-dire pilotée par l'unité II à partir de la mise en place de la lame à la position repère Z0, ou bien manuellement, l'opérateur pouvant faire monter et descendre la platine en agissant sur les touches d'un clavier de commande.

De même ce système fonctionne de manière similaire avec une caméra vidéo délivrant un signal aux normes CCIR basé sur 50 Hz (pays européens) ou EIA (60 Hz, aux USA).

Enfin, en ce qui concerne la partie mécanique du système, c'est-à-dire l'entraînement de la molette de réglage en hauteur de la platine, outre les caractéristiques indiquées plus haut pour le moteur et le réducteur, on peut préciser que la liaison entre la sortie dudit réducteur et la vis micrométrique se fait au moyen d'un joint flexible, amortissant les accélérations et supportant les défauts d'alignement.

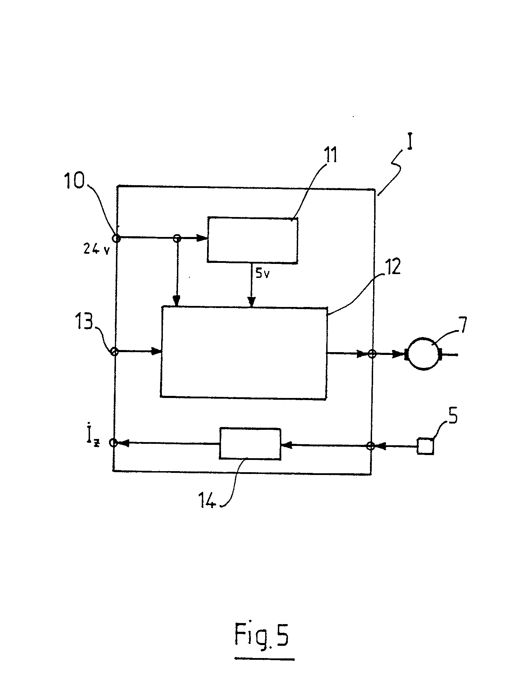

On va maintenant décrire les cartes en se référant aux figures 5 à 9.

La figure 5 est un synoptique général de la carte de puissance désignée par I sur la figure 1. Cette carte a deux fonctions :

-conversion des signaux logiques en signaux de puissance de commande du moteur, en sens, avance et mode. A cet effet, l'alimentation 24 V entrant en 10, passe par un convertisseur de tension 11, et alimente un circuit de commande du moteur 12 recevant les signaux logiques de commande provenant de 23 et délivrant les signaux de puissance du moteur pas à pas 7.

D'autre part elle comporte un codeur 14 transformant les signaux du micro-interrupteur 5 en signaux logiques $I_z$(fermé = 0, ouvert = 1). C'est ce micro-interrupteur qui a pour fonction de repérer la position de la platine.

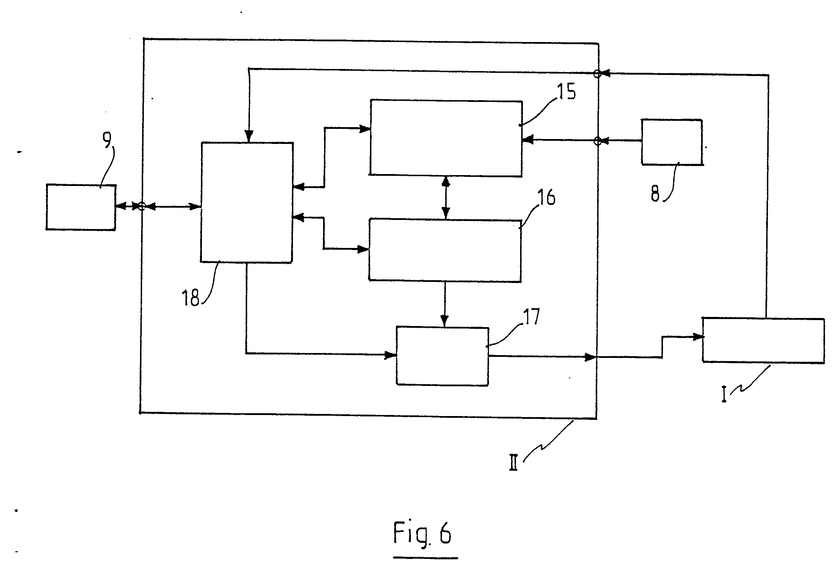

La figure 6 est un synoptique général de la carte de pilotage désignée par II sur la figure 1. Elle reçoit les signaux vidéo provenant de la caméra 8 ; ces signaux sont traités par des modules, à savoir des modules de traitement 15, des modules de synchronisation 16 et des modules de commande 17, puis envoyés vers une interface CPU 18 par l'intermédiaire de laquelle ils sont gérés par l'unité centrale 9, comme il sera décrit plus en détail ci-après.

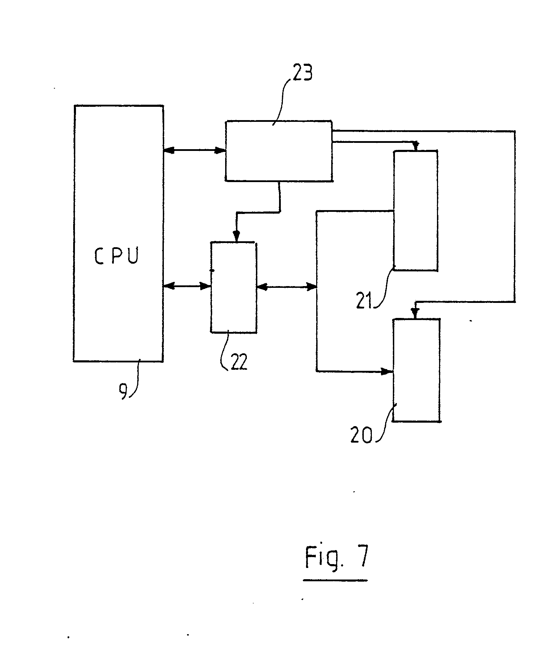

La figure 7 illustre le détail de l'interface 18, interposée entre le "bus", donnée de l'unité centrale 9 et un port d'entrée 20 et un port de sortie 21, par l'intermédiaire d'un circuit "buffer" 22 et d'un module de contrôle du bus 23.

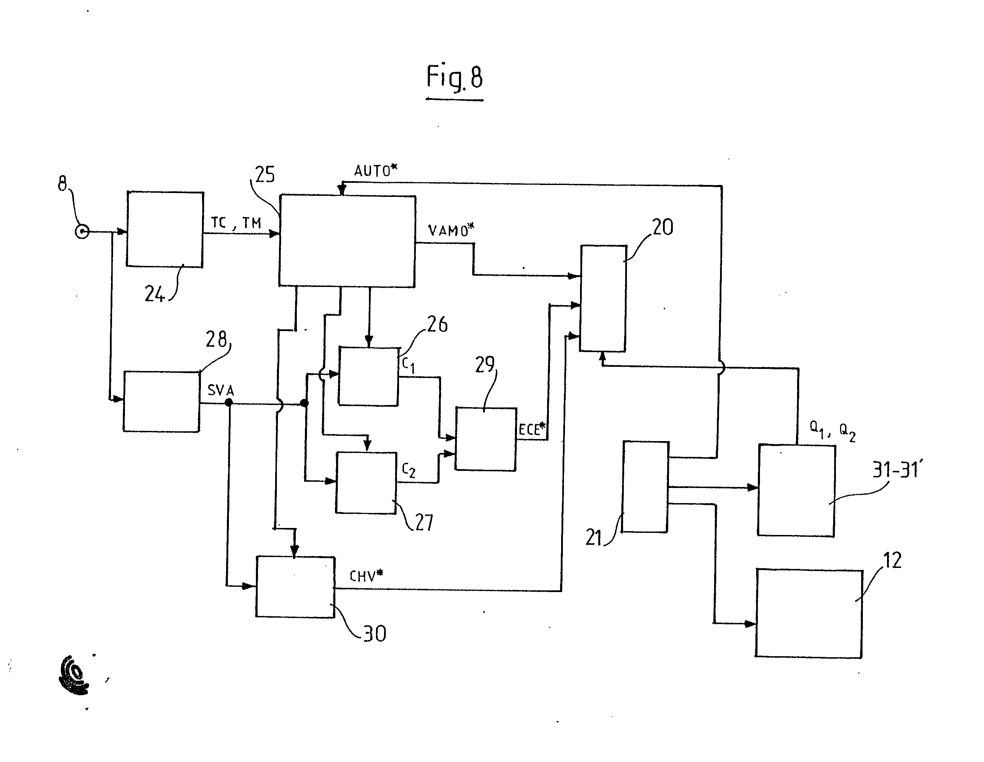

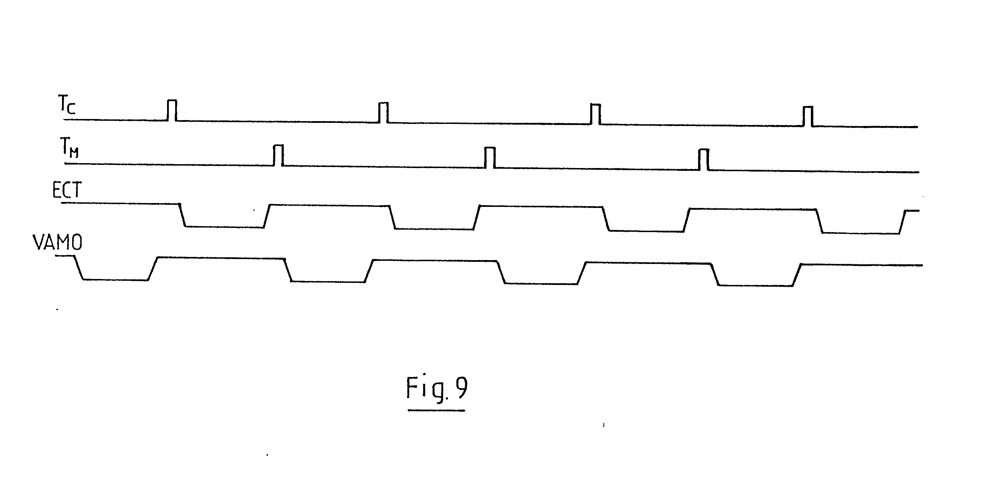

Les figures 8 et 9 illustrent le synoptique fonctionnel de la carte de pilotage et le timing des signaux intervenant dans le fonctionnement du système.

Les signaux vidéo provenant de la caméra 8 passent par un détecteur de tops 24 qui génère deux signaux TC, TM, qui sont des tops de trame de parité respectivement paire et impaire constamment maintenue (courbes TC et TM de la figure 9). Les deux trames se succédant dans le temps, les deux séries de signaux TC et TM forment l'image complète. Les déplacements de la platine se font par rapport au signal TM et l'analyse du signal se fait par rapport au signal TC : pendant une trame on procède à un déplacement élémentaire de la platine tandis que pendant l'autre on examine l'effet a niveau du signal vidéo. Cette analyse se fait dans des modules de synchronisation 25. C'est en fonction de cette analyse que l'on sait si l'on est dans une portion ascendante ou descendante de la courbe de la figure 3. Le déplacement de la platine est autorisé par le signal "VAMO* " généré par 25.

Deux détecteurs de crête 26 et 27 détectent de leur côté le signal vidéo amplifié dans un amplificateur 28, et qui sont comparés dans un comparateur 29. Les détecteurs de crêtes 26 et 27 permettent de garder des valeurs maximales de tension C1, C2, correspondant aux intensités maximales de deux images consécutives. Le comparateur 29 permet de donner le signe de la comparaison sous forme binaire ECE*. Ce signal ECE vaut <u>zéro</u> quand la tension maximale $V_M$ à l'instant t + 1 est supérieure à cette tension maximale $V_M$ à l'instant précédent t. Il vaut <u>un</u> quand $V_M$ (t+1) est inférieure ou égal à $V_M$ (t). C'est ce signal qui est envoyé au port d'entrée 20 pour être lu par l'unité centrale.

Un module détecteur d'images 30 permet de détecter une image dont l'intensité maximale est supérieure à un certain seuil $I_s$, ce qui est utilisé pour la recherche de la plage de focalisation. Ce module génère un signal CHV* qui vaut <u>zéro</u> s'il n'y a pas d'image d'intensité supérieure à $I_s$ et vaut <u>un</u> s'il y a une image d'intensité supérieure ou égale à $I_s$. Ce signal est également envoyé au port d'entrée 20.

Toutes ces opérations sont validées si (c'est-à-dire autorisées par) le signal AUT* =0.

Par ailleurs, étant donné que seule la position $Z_o$est repérée physiquement par le micro-interrupteur 5, les autres repères $Z_1$ et $Z_3$ sont repérés par des compteurs 31. A ces compteurs 31 sont associés des comparateurs 31', à consignes $Q_1^*$ , $Q_2^*$ qui sont des informations numériques correspondant aux repères fictifs $Z_1$, $Z_3$ par rapport à $Z_o$, ce qui permet donc de repérer une plage possible de focalisation, tandis que le détecteur d'images 30 repère la plage réelle de focalisation. Ces signaux $Q_1^*$ , $Q_2^*$ sont activés quand les compteurs "valent" $Z_1$ et $Z_3$ respectivement, ces valeurs étant exprimées en 1/2 pas de rotation du moteur.

Les deux courbes ECT* et VAMO* de la figure 9 illustrent le timing de la validation des détecteurs de crête 26 et 27, et de l'avance du moteur, respectivement, comme exposé plus haut, en fonction des tops trames.

Ce dispositif permet d'automatiser l'analyse des échantillons microbiologiques. En effet pour chaque champ microscopique on a une mise au point automatique, ce qui permet de stocker chaque image en mémoire, grâce à des cartes spécifiques, et de l'analyser afin de compter les microorganismes. Les déplacements en X,Y de la platine sont assurés par 2 moteurs pas-à-pas identiques à celui décrit précédemment, et les déplacements sont repérés par un microinterrupteur également.

Cela permet d'avoir un résultat très rapidement, ce qui est très intéressant pour un biologiste. Cette méthode peut s'appliquer aussi dans le biomédical.

## Revendications

1. Dispositif pour la mise au point automatique d'un instrument d'optique, notamment d'un microscope, caractérisé en ce que la vis micrométrique déterminant les déplacements verticaux de la platine par rapport à l'objectif est accouplée à un groupe moteur réducteur asservi au signal vidéo recueilli par une caméra vidéo recevant l'image donnée par l'instrument et traitée par un ordinateur, la rotation du moteur étant commandée à chaque instant en sens et en rotation jusqu'à ce que l'intensité lumineuse de ladite image ait atteint son intensité maximale.

2. Dispositif selon la revendication 1, caractérisé en ce que ledit signal étant constamment comparé au précédent, le sens de rotation du moteur est inversé dès qu'une valeur devient inférieure à la précédente, et par itération, la platine est amenée à la position de focalisation.

3. Dispositif selon les revendications 1 et 2, caractérisé en ce que l'ensemble du système est commandé par deux cartes électroniques, la première de ces cartes commandant la puissance du moteur, et la seconde pilotant la première à partir de la demande de focalisation en fonction de l'analyse du signal vidéo fourni par la caméra.

4. Dispositif selon les revendications 1 à 3, caractérisé en ce que ladite demande de focalisation est effectuée par l'unité centrale de l'ordinateur.

5. Dispositif selon les revendications 1 à 3, caractérisé en ce que ladite demande de focalisation est effectuée directement par l'utilisateur au moyen de touches de commande.

6. Dispositif selon l'une quelconque des revendications 1 à 5, caractérisé en ce que ladite demande de focalisation est effectuée sur le premier champ de la lame, en faisant une recherche à partir d'une position de repère réglable selon l'objectif.

7. Dispositif selon l'une quelconque des revendications 1 à 5, caractérisé en ce que ladite demande de focalisation est effectuée sur un champ intermédiaire en prenant comme repère la position du champ précédent.

8. Dispositif selon les revendications 1 à 3, caractérisé en ce que ladite deuxième carte électronique de pilotage permet de détecter un champ vide et un champ parasite comportant un ou plusieurs objets trop lumineux.

9. Dispositif selon les revendications 1 à 3, caractérisé en ce que ladite deuxième carte électronique de pilotage permet de détecter un champ vide et un champ parasite comportant un ou plusieurs objets trop peu lumineux.

10. Dispositif selon l'une quelconque des revendications 1 à 9, caractérisé en ce qu'il comporte un ensemble de trois cartes, à savoir une première carte de puissance commandant en puissance le moteur à partir de signaux logiques, et de transmettre les informations binaires du micro-interrupteur, cette première carte étant contrôlée par une seconde carte comportant des modules analogiques de traitement du signal vidéo et des modules de synchronisation, cette seconde carte étant elle-même pilotée par une unité centrale à base de microprocesseurs.

11. Dispositif selon l'une quelconque des revendications 1 à 9, caractérisé en ce que l'asservissement permettant d'arriver à point de focalisation à chaque instant résulte de la décomposition de l'image envoyée par la caméra en deux trames, les déplacements élémentaires de la platine se faisant pendant la première trame et la détection de l'intensité du point le plus lumineux de l'image se faisant pendant la seconde trame, la comparaison des valeurs maximales obtenues pour deux images successives permettant de déterminer le sens de déplacement de la platine jusqu'au moment où est détectée une variation négative significative.

12. Application du dispositif selon l'une quelconque des revendications 1 à 11 à l'analyse des échantillons microbiologiques.

Fig 1

Fig 2

0 229 581

Fig 3ª

Fig 3ᵇ

$\dot{I}_{(p-2)}$

Fig. 4$\underline{a}$

$\dot{I}_{(p-1)}$

Fig. 4$\underline{b}$

$\dot{I}_p$

Fig. 4$\underline{c}$

Fig.5

Fig. 6

Fig. 7

Fig.8

Fig. 9

0 229 581

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | OPTIK, vol. 55, no. 4, mai 1980, pages 437-448, Wissenschaftliche Verlagsgesellschaft mbH, Stuttgart, DE; C. DÄHNE et al.: "A microscope focusing technique for a digital image analysing system" * Page 438, paragraphe 2.1.1; page 442, paragraphe 3; figure 4 * | 1-12 | G 02 B 21/00 G 02 B 7/11 G 02 B 21/24 G 01 N 15/14 H 04 N 5/232 |
| | --- | | |
| Y | IEEE TRANSACTIONS ON BIOMEDICAL ENGINEERING, vol. BME-29, no. 2, février 1982, pages 92-100, IEEE, New York, US; A.M.J. VAN DRIEL-KULKER et al.: "The use of LEYTAS in analytical and quatitative cytology" * Page 93, colonne de gauche, ligne 41 - page 93, colonne de droite, ligne 17; page 94, colonne de droite, lignes 41-47; figure 1 * | 1-12 | |
| | --- | | DOMAINES TECHNIQUES RECHERCHES (Int. Cl.4) |
| A | GB-A-2 000 655 (OLYMPUS KOGAKU KOGYO) * Page 1, lignes 9-21; page 1, lignes 27-30 * | 1 | G 02 B 7/00 G 02 B 21/00 G 06 F 15/00 H 04 N 5/00 G 01 N 15/00 |
| | --- -/- | | |

Le présent rapport de recherche a été établi pour toutes les revendications

| Lieu de la recherche | Date d'achèvement de la recherche | Examinateur |
|---|---|---|
| LA HAYE | 02-02-1987 | POPINEAU G.J.P. |

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 967 056 (Y. KOTARO et al.) <br> * Résumé; colonne 15, ligne 32 - colonne 17, ligne 32; figure 10 * | 2 | |
| A | US-A-4 422 097 (M. INUIYA) <br><br> * Colonne 1, lignes 43-63; colonne 2, ligne 61 - colonne 36; figure 1 * | 2-4,7, 10 | |
| A | US-A-3 721 759 (W. LANG) <br> * Résumé; colonne 1, lignes 55-61; colonne 2, ligne 35 - colonne 3, ligne 5; colonne 4, lignes 59-63; figures 1-3 * | 1,5,6 | |

---

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 02-02-1987 | POPINEAU G.J.P. |

OEB Form 1503 03 82